# EUROPÄISCHE PATENTSCHRIFT

(11) **EP 0 367 324 B1**
(45) Veröffentlichungstag und Bekanntmachung des Hinweises auf die Patenterteilung: **29.11.1995**
(21) Anmeldenummer: 89202604.8
(22) Anmeldetag: 14.10.1989
(51) Int. Cl.: B60R 21/20, B60R 21/26

(54) **Gassack-Aufprallschutzvorrichtung**
Air bag crash protection device
Dispositif de protection par sac d'air en cas d'accident

(30) Priorität: 01.11.1988 DE 3837086
(43) Veröffentlichungstag der Anmeldung: 09.05.1990
(73) Patentinhaber: KOLBENSCHMIDT Aktiengesellschaft, D-74150 Neckarsulm (DE)
(72) Erfinder: Kreuzer, Martin, D-8751 Kleinwallstadt (DE)
(74) Vertreter: Rieger, Harald, Dr.

(56) Entgegenhaltungen:
- DE-C- 3 544 704
- DE-U- 8 619 670
- GB-A- 2 072 105
- Plastverarbeiter, 38. Jahrgang, 1987, Nr. 3, S. 108-112, 114
- Kraftfahrtechnisches Taschenbuch, Bosch, 20. Auflage, 1987, S. 162
- Kunststoffverarbeitung, Schwarz/Ebeling et al. Würzburg 1985, 3. Auflage, S. 153/154

## Beschreibung

Die Erfindung betrifft eine Gassack-Aufprallschutzvorrichtung, die in das Lenkrad bzw. Armaturenbrett von Kraftfahrzeugen integrierbar ist und aus dem den zusammengefalteten aufblähbaren Gassack sowie den mit diesem verbundenen Festtreibstoff-Gasgenerator aufnehmenden schüsselförmigen Generatorträger und der den Gassack abdeckenden über seinen Rand reichenden mit dem Generatorträger verklipsten Abdeckung aus elastischem Kunststoff besteht, deren Deckel genau definierte Sollbruchlinien aufweist und deren auf den Träger aufgeklipster umlaufender Rahmen mit den durch die Sollbruchlinien begrenzten Deckelabschnitten scharnierartig verbunden ist.

Tragendes Element einer Gassack-Aufprallschutzvorrichtung ist der Generatorträger, der außerdem die Aufgabe hat, den Gassack und dessen Arretierungsblech (Flanschblech) aufzunehmen.

In der EP-A-0 235 383 ist eine Gassack-Aufprallschutzvorrichtung beschrieben, die aus einer vormontierten Baueinheit zusammengesetzt ist und ein Generatorgehäuse, eine Grundplatte als Generatorträger, einen aufblähbaren Gassack, zwei Gasgeneratoren und eine mit einer Sollbruchlinie versehene Abdeckung des Gassacks aufweist. Bei der Gassack-Aufprallschutzvorrichtung nach der DE-C-35 44 704 ist ein Gehäuse vorgesehen, in dem zentral ein Gasgenerator angeordnet ist, an den an zwei gegenüberliegenden Seiten zwei gegenüber dessen Oberfläche vertiefte Behälter angrenzen. Ein Gassack ist mit einer Sacklage rund um den Gasgenerator befestigt und in einer Packlage an zwei senkrecht zur Mittelebene liegenden Seiten zur Mittellinie hin eingefaltet. Aus der DE-A-36 30 685 ist eine Gassack-Aufprallschutzvorrichtung bekannt, bei der der Gassack mit dem Gasgenerator in einem schüsselförmigen Nabenkörper eines Lenkrads untergebracht ist. Der Nabenkörper weist eine mittige Bohrung für die Einführung der Lenksäule auf, die in den Nabenkörper hineinragt, wozu der Gasgenerator lenksäulenseitig eine koaxiale Ausnehmung besitzt.

Bei diesen bekannten Gassack-Aufprallschutzvorrichtungen besteht der Generatorträger entweder aus tiefziehfähigem Stahl oder zur Gewichtsminimierung aus Aluminium. Um den für die Aufnahme des Gassacks notwendigen Raum zu schaffen, sind vergleichsweise aufwendige Tiefziehmaßnahmen erforderlich, bei denen in aller Regel die Grenzen der Tiefziehfähigkeit des verwendeten Werkstoffs erreicht sind.

Es ist die Aufgabe der vorliegenden Erfindung, für die eingangs beschriebene Gassack-Aufprallschutzvorrichtung einen Generatorträger zu entwickeln, der ohne besonderen Aufwand in gewichtsminimierter Form herstellbar ist und der hohe Festigkeitswerte besitzt.

Diese Aufgabe ist erfindungsgemäß dadurch gelöst, daß der Generatorträger aus durch Pressen verformtem glasmattenverstärktem Thermoplast besteht. Der Vorteil dieses Werkstoffs liegt darin, daß bei relativ hoher Festigkeit große Materialumformungen möglich sind. Ein weiterer Vorteil ist darin zu sehen, daß durch die in alle Richtungen unveränderte Glasgewebeverteilung im Kunststoff gleichbleibende physikalische Eigenschaften gewährleistet sind. Damit einhergehend wird eine nahezu gleichbleibende Schlagzähigkeit für die im Kraftfahrzeugbau interessierenden Temperaturbereiche erreicht.

Nach einem weiteren Erfindungsmerkmal läßt sich am lenkradseitigen Abschnitt ein nach außen abgebogender Rand anformen, hinter den die Abdeckung geklipst ist und der die durch das Aufblähen des Gassacks auftretenden Kräfte problemlos auffangen kann.

Nach einem vorzugsweisen Merkmal der Erfindung kommen als Matrix für die glasmattenverstärkten Thermoplaste insbesondere Polypropylen, Polyamid sowie Polybutylenterephthalat in Betracht, so daß Elastizitätsmoduli von größer 5000 N/mm² bei einer Biegefestigkeit von größer 60 N/mm² erreicht werden.

In vorteilhafter Weise ist der Rand des Generatorträgers so ausgebildet, daß dieser ohne weiteres Umfangskräfte von größer 1600 N aufnehmen kann.

Der nach der Erfindung ausgebildete Generatorträger ist in der Zeichnung beispielhaft dargestellt und wird nachfolgend näher erläutert.

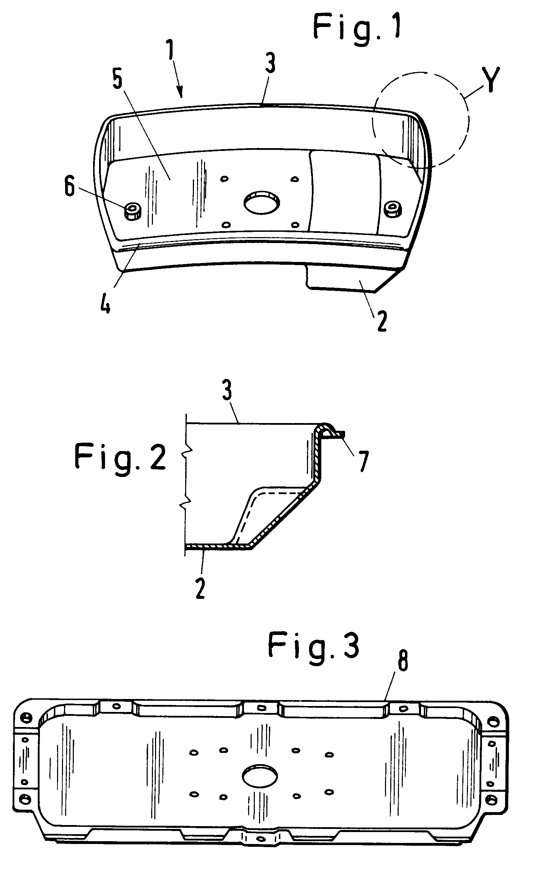

Fig. 1 zeigt in isometrischer Darstellung einen aus glasmattenverstärktem Thermoplast, z.B. Polypropylen, gepreßten schüsselförmigen Generatorträger (1) für die Aufnahme eines parallel zur Lenkradachse gefalteten Gassacks in einem tiefgezogenen Abschnitt (2) (rechte Zeichnungshälfte (3)) und eines senkrecht zur Längsachse gefalteten Gassacks (linke Zeichnungshälfte (4)). In den Boden (5) des Generatorträgers (1) sind die für seine Befestigung am Lenkrad erforderlichen Befestigungselemente (6), z.B. Muttern, eingesetzt.

In dem in Fig. 2 dargestellten Detail "Y" der Fig. 1 ist der nach außen abgebogene vergleichsweise breite Rand (7) des Generatorträgers (1) zu erkennen, mit dem die Abdeckung verklipsbar ist.

In Fig. 3 ist in isometrischer Darstellung ein Generatorträger (8) zur Aufnahme von zwei Gasgeneratoren und eines ein vergleichsweise größeres Volumen besitzenden Gassacks wiedergegeben, der problemlos aus glasmattenverstärktem Thermoplast gefertigt werden kann.

## Patentansprüche

1. Gassack-Aufprallschutzvorrichtung, die in das Lenkrad bzw. Armaturenbrett von Kraftfahrzeugen integrierbar ist und aus dem den zusammengefalteten aufblähbaren Gassack sowie den mit diesem verbundenen Festtreibstoff-Gasgenerator aufnehmenden schüsselförmigen Generatorträger und der den Gassack abdeckenden über seinen Rand reichenden mit dem Generatorträger verklipsten Abdeckung aus elastischem Kunststoff besteht, deren Deckel genau definierte Sollbruchlinien aufweist und deren mit dem Generatorträger verklipster umlaufender Rahmen mit den durch die Sollbruchlinien begrenzten Deckelabschnitten scharnierartig verbunden ist, dadurch gekennzeichnet, daß der Generatorträger (1,8) aus glasmattenverstärktem Thermoplast besteht.

2. Gassack-Aufprallschutzvorrichtung nach Anspruch 1, dadurch gekennzeichnet, daß als Thermoplast Polypropylen, Polyamid oder Polybutylenterephthalat verwendet wird.

3. Gassack-Aufprallschutzvorrichtung nach den Ansprüchen 1 und 2, gekennzeichnet durch einen am lenkradseitigen Ende des Generatorträgers (1) angebrachten nach außen abgebogenen breiten Rand (7).

4. Gassack-Aufprallschutzvorrichtung nach den Ansprüchen 1 bis 3, dadurch gekennzeichnet, daß der Rand (7) Umfangskräfte von größer 1600 N aufnimmt.

## Claims

1. An airbag impact protection device which can be integrated in the steering-wheel or dashboard of motor vehicles and consists of the dish-shaped generator carrier, which receives the collapsed, inflatable airbag and the solid-propellant gas generator connected thereto, and the covering of elastic plastics material which covers the airbag, extends over the edge thereof and is clipped to the generator carrier, the cover of which covering has exactly defined rated break lines and the circumambient frame of which, which is clipped to the generator carrier, is hinged to the cover sections defined by the rated break lines, characterised in that the generator carrier (1, 8) is made of thermoplastic material reinforced by glass mats.

2. An airbag impact protection device according to Claim 1, characterised in that polypropylene, polyamide or polybutylene terephthalate is used as the thermoplastic material.

3. An airbag impact protection device according to Claims 1 and 2, characterised by a wide edge (7) bent outwards on the steering-wheel end of the generator carrier (1).

4. An airbag impact protection device according to Claims 1 to 3, characterised in that the edge (7) takes up peripheral forces of more than 1600 N.

## Revendications

1. Dispositif de protection contre les chocs à air-bag, qui peut être intégré dans le volant ou dans le tableau de bord de véhicules automobiles et qui est constitué par le support en forme d'auge du générateur de gaz qui loge l'air-bag gonflable replié et le générateur de gaz contenant un agent gonflant solide, et qui est relié à l'air-bag, et par le capot en matière plastique élastique qui recouvre l'air-bag par l'intermédiaire de son bord et est fixé par encliquetage au support du générateur de gaz, et dont le couvercle comporte des lignes de rupture de consigne définies de façon précise et dont le cadre périphérique, qui est encliqueté sur le support du générateur de gaz, est relié, à la manière d'une charnière, aux parties du couvercle délimitées par les lignes de rupture de consigne, caractérisé par le fait que le support (1,8) du générateur de gaz est constitué par une matière thermodurcissable, renforcée par un mat de verre.

2. Dispositif de protection contre les chocs à air-bag suivant la revendication 1, caractérisé par le fait qu'on utilise, comme matière plastique thermodurcissable, du polypropylène, du polyamide ou du téréphtalate de polybutylène.

3. Dispositif de protection contre les chocs à air-bag suivant les revendications 1 et 2, caractérisé par un bord large (7) replié vers l'extérieur et disposé sur l'extrémité, tournée côté volant, du support (1) du générateur de gaz.

4. Dispositif de protection contre les chocs à air-bag suivant les revendications 1 à 3, caractérisé par le fait que le bord (7) résiste à des forces périphériques supérieures à 1600 N.
